# FASCICULE DE BREVET EUROPEEN

(11) **EP 1 771 714 B1**
(45) Date de publication et mention de la délivrance du brevet: **15.02.2017**
(21) Numéro de dépôt: 05754585.7
(22) Date de dépôt: 08.06.2005
(51) Int. Cl.: G01M 11/02

(54) **Procédé d'inspection d'un composant optique de l'industrie ophtalmique**
Verfahren zur Prüfung einer optischen Komponente der ophthalmischen Industrie
method for testing an optical component of the ophtalmic industry

(30) Priorité: 09.06.2004 EP 04447138
(43) Date de publication de la demande: 11.04.2007
(73) Titulaire: Automation & Robotics, 4800 Verviers (BE)
(72) Inventeur: LAURENT, Christian, B-4800 Verviers (BE)
(74) Mandataire: Lerho, Marc J. A.
(86) Numéro de dépôt international: PCT/BE2005/000094
(87) Numéro de publication internationale: WO 2005/121740

(56) Documents cités:
- DE-A1- 10 344 788
- DE-A1- 19 944 354
- US-A- 5 307 141
- US-A- 2005 046 873
- US-A1- 2003 137 655
- US-B1- 6 437 857
- US-B1- 6 438 272
- US-B1- 6 476 909
- FRANKOWSKI G.; CHEN M.; HUTH T.: "Real-time 3D Shape Measurement with Digital Stripe Projection by Texas Instruments Micromirror Devices DMD", PROCEEDINGS OF SPIE, vol. 3958, 2000, pages 90-105,

## Description

### Objet de l'invention

La présente invention se rapporte à un appareil convenant pour la détection de défauts ou la localisation de marquages semi-visibles présents dans des pièces optiques transparentes ou réfléchissantes, par exemple la détection de déformations et défauts d'aspect ("cosmetic control").

Un exemple de domaine d'application de l'invention est celui du contrôle de lentilles optiques et de tous produits transparents et/ou réfléchissants dans l'industrie ophtalmique.

On définit un produit réfléchissant comme étant a priori un produit dont la surface se comporte vis-à-vis de la lumière incidente selon la loi de la réflexion spéculaire (en anglais, *specular reflection).*

### Arrière-plan technologique, état de la technique et problème technique à résoudre

### Détection et caractérisation des défauts d'aspects

Pour la détection automatique de défauts en vision artificielle, on connaît et on utilise de nombreuses méthodes, mettant en oeuvre des systèmes d'éclairage présentant des propriétés adaptées au type de défaut particulier à détecter. On peut citer par exemple les dispositifs à champ clair et à champ noir, les systèmes de projection, les systèmes à observation d'alternances par exemple sous forme de bandes noires et blanches, les méthodes de schlieren, dites du couteau ("knife edge"), etc.

On considère ici trois types principaux de défauts qui peuvent apparaître simultanément (non exclusifs) :
- défaut diffusant : visible même s'il affecte une petite surface ; "diffuse" la lumière au sens habituel (*scattering*) ;
- défaut déviant : ne procure pas de diffusion mais une modification locale de l'effet de réfraction (par exemple effet de "loupe") ;
- défaut absorbant : diminue la transmission localement.

Les dispositifs connus se caractérisent souvent par la nécessité de mouvement, soit des pièces à observer, soit des dispositifs d'éclairage (FR-A-98 14417, EP-A-556 655, "Machine Vision System for specular Surface Inspection : Use of Simulation Process as a Tool for Design and Optimization", R. SEULIN et al., Laboratoire Le2i, QCAV Journées 21-23 mai 2001, Le Creusot, France) ou encore par des dispositifs appropriés de projection (EP-A-856 728). On obtient ainsi des systèmes dont la configuration est fixée par l'objectif à atteindre et les moyens mécaniques, géométriques ou optiques mis en oeuvre.

De nombreux systèmes d'éclairage ont leur configuration fixée par la taille et la forme de l'objet à observer, comme par exemple l'appareil décrit dans le document US-B-6,476,909. Celui-ci propose un appareil d'inspection d'une pièce optique, dans lequel un moyen de diffusion est interposé entre la source de lumière et la pièce à inspecter. L'élément diffusant est de préférence un panneau LCD à deux dimensions présentant trois zones différant par leur facteur de transmission en diffusion : une zone centrale à faible diffusivité, une zone périphérique à haute diffusivité et un masque extérieur, entourant ces deux zones et interceptant la lumière. La forme des deux premières zones dépend de la forme de l'objet à inspecter. La zone centrale a une taille qui dépend de la taille de l'objet. Les images de l'objet sont reçues sur une caméra CCD. L'image de l'objet, en l'absence de défaut, est uniquement formée par la lumière émanant de la zone centrale homogène. Ainsi les défauts ou poussières absorbants, c'est-à-dire de couleur noire ou foncée, ont une luminance plus faible que le reste de l'image. Par contre, toute particule diffusante diffuse à la fois la lumière directe émanant de la zone centrale et la lumière indirecte émanant de la zone périphérique, ce qui renforce la luminance locale à l'endroit du défaut. Ce dispositif permet donc de détecter plusieurs types de défauts simultanément. Dans ce document, on décrit essentiellement l'observation d'une pièce optique sur un fond central homogène. Il s'agit d'une méthode à champ "noir" où le fond est gris plutôt que noir afin de faire apparaître des défauts absorbants. On se rend compte aisément des limites d'un tel dispositif pour caractériser ou même détecter des défauts (peu) déviants ou des défauts, même importants, à la fois absorbants et diffusants, en raison des effets antagonistes de ces deux types de défauts.

De plus, particulièrement pour les objets de "grande taille", les différents points de l'objet ne sont pas éclairés de la même façon avec ce genre de dispositif. Ceci rend la sensibilité de détection de défauts tributaire de la position et aussi de l'orientation du défaut, lorsque celui-ci diffuse la lumière de façon anisotrope. Un défaut, tel qu'une griffe par exemple, situé au bord de l'objet examiné, peut dévier la lumière de manière différente selon son orientation. Aussi, avec le dispositif décrit ci-dessus, on peut très bien détecter une griffe tangentielle, alors qu'une griffe radiale identique pourra ne pas être observée.

Il est connu que les défauts déviants et les défauts diffusant la lumière sous un angle faible ou dans un cône peu ouvert sont avantageusement détectés de façon sensible par les "méthodes de schlieren", qui sont cependant peu adaptées aux objets de caractéristiques variables sur leur surface ou pour passer d'un modèle d'objet à l'autre.

Le problème qui se pose dès lors pour la détection de défauts de pièces optiques est que les appareils de mesure existants sont confinés, de par leur configuration relativement rigide, à une gamme restreinte d'applications.

Un besoin se fait donc sentir pour la conception d'un appareil de détection de défauts d'aspect qui soit flexible en fonction de l'application choisie dans une large gamme (par exemple détection d'un grand nombre de types de défauts différents sur toute la surface de l'objet) et qui permette la mise en oeuvre "à la carte" de différentes méthodes d'éclairage (par exemple champ noir ou clair, alternance de franges noires/blanches, taches ou mire de points, etc.).

Le document US 6,438,272 B1 divulgue une méthode de traçage de courbes de niveau à la surface d'un objet basée sur une technique de projection de franges. Un système de projection vidéo digital est utilisé pour projeter sur l'objet des motifs à franges créés digitalement. Le motif à franges distordu par la géométrie de la surface de l'objet est capturé par une caméra CCD haute résolution. Afin d'augmenter la résolution, une technique de décalage de phase digitale purement logicielle est utilisée, afin d'éliminer le besoin de systèmes de positionnement précis comme dans les systèmes de décalage de phase traditionnels. La surface est reconstruite par application d'algorithmes de déroulement de phase.

Le document US 2005/0046873 A1 divulgue une technique de mesure de la forme tridimensionnelle d'un objet par projection de lumière sur cet objet et en particulier un appareil de mesure comprenant un projecteur, une caméra, un générateur de motifs à franges destinés à être projetés par le projecteur sur l'objet et un convertisseur de l'intensité lumineuse des motifs à franges projetés en angle de phase, ce qui permet de reconstituer la topographie de la surface.

Dans le document US 2003/0137655 A1, un motif objet est imagé par un système d'imagerie sur le plan image du système d'imagerie, en un endroit où se trouve un motif de référence correspondant au motif objet, en vue de mesurer la fidélité d'image du système d'imagerie optique, comme par exemple une lentille ophtalmique, photographique ou de projection à utilisation dans le spectre visible. Le motif de superposition résultant, à deux dimensions, est détecté par résolution spatiale afin de déterminer par là les paramètres d'imagerie. Le motif objet est généré au moyen d'un générateur de motifs programmable servant de source de lumière auto-lumineuse, configurable électroniquement et incohérente et pouvant avoir un moniteur couleur. Le système de mesure permet de contrôler rapidement, de manière flexible, des systèmes d'imagerie optique, en un minimum de temps et d'effort portant sur l'installation mécanique requise.

Le document DE 199 44 354 A1 divulgue un procédé et un appareil pour détecter la forme ou les propriétés de réflexion d'une pièce de test réfléchissante ou transparente. Un motif essentiellement sinusoïdal généré à distance de la pièce de test est imagé par un système optique auxiliaire, après avoir été réfléchi par ou avoir été observé au travers de la pièce de test et la phase locale de ce motif est déterminée dans le plan focal. L'invention fournit une méthode pour choisir la distance entre le motif et la pièce, l'ouverture d'observation du système optique auxiliaire et la période du motif, de manière à obtenir les meilleures sensibilité et précision possibles.

### Buts de l'invention

La présente invention vise à fournir un procédé permettant de détecter dans des pièces optiques de précision ou de qualité des défauts de toute nature, dont la dimension caractéristique s'étend dans une très large gamme, typiquement entre le micron et plusieurs millimètres pour la plupart des lentilles.

L'invention a notamment pour but de fournir un procédé pour la mise en évidence de multiples classes de défauts d'aspect ou discontinuités structurelles telles que marquages, contours, etc., ce qui, suite à leur interaction spécifique éventuellement fortement anisotrope avec la lumière et suite à leur orientation, peut requérir des configurations très variables du dispositif d'éclairage utilisé et donc une grande adaptabilité de celui-ci.

### Principaux éléments caractéristiques de l'invention

La présente invention, selon les termes de la revendication 1, se rapporte à un procédé d'inspection d'une pièce ou d'un composant optique de l'industrie ophtalmique, transparent ou réfléchissant à réflexion spéculaire pour détecter des défauts d'aspect ou des discontinuités structurelles, dans une gamme déterminée de taille caractéristique du défaut ou de la discontinuité structurelle, ladite gamme s'étendant du micron à plusieurs millimètres.

L'appareil permettant de mettre en oeuvre le procédé de l'invention comprend des moyens d'éclairage et un système de vision artificielle associé, l'objet inspecté étant spatialement interposé entre les moyens d'éclairage et le système de vision artificielle. Ce dernier comprend une caméra digitale linéaire ou matricielle précédée d'un objectif et couplée à un système de traitement d'images

Les moyens d'éclairage comprennent des moyens optoélectroniques programmables sous forme d'un modulateur de lumière spatial programmable, en abrégé SLM, pour produire un fond lumineux de luminance variable dans l'espace et dans le temps. Le SLM, comprenant un réseau de pixels activables individuellement et instantanément, est configuré pour générer/afficher consécutivement dans le temps une pluralité de mires, chacune comprenant un motif périodique de taille et de fréquence spatiale données. Le motif est répété de manière contrastée et avec des transitions nettes sur un fond uniforme avec une fréquence spatiale comprise entre 0,01 et 100 motifs/mm, lesdites mires générées consécutivement étant décalées spatialement, de sorte qu'une pluralité d'images correspondant auxdites mires est captée par le système de vision artificielle après réflexion ou transmission par la pièce ou le composant optique et recombinée sous forme d'une image composée unique. L'image composée unique est obtenue en utilisant pour chaque pixel d'image, le traitement permettant de retenir le niveau de gris minimal, maximal ou de la moyenne des images. La fréquence spatiale et la taille des motifs sont choisies pour être adaptées à la détection des défauts ou des discontinuités structurelles dans la gamme déterminée de taille caractéristique.

Des modalités préférées de réalisation de l'appareil selon l'invention sont décrites dans les revendications secondaires 2 à 11.

En particulier, l'invention concerne l'utilisation du procédé décrit ci-dessus pour l'inspection d'une pièce optique, notamment pour la détection de défauts déviant ou diffusant la lumière, la lecture de marquages moulés ou gravés, le relevé de discontinuités à la surface de l'objet ou le relevé du contour de l'objet.

L'invention permet à cette utilisation d'être compatible avec un changement flexible et rapide du type de méthode utilisé, telle que méthode de champ noir ou clair, au moins partiel, méthode du couteau, l'alternance contrastée de noir et blanc et une utilisation de zone(s) lumineuse(s) essentiellement ponctuelle(s).

### Brève description des figures

La figure 1 représente très schématiquement le dispositif selon la présente invention dans le cas de l'inspection d'un objet par réfraction, par exemple une lentille.

La figure 2 représente un exemple d'image d'une lentille présentant des défauts d'aspect, sur fond de mire bidimensionnelle, sélectionnée dans un ensemble d'images consécutives prises avec la mire décalée d'un pas constant selon les deux directions principales, au moyen d'une forme d'exécution préférée de l'appareil selon la présente invention.

La figure 3 représente une image résultante obtenue par recombinaison, au moyen du traitement d'images, des images du type représenté sur la figure 2.

### Description d'une forme d'exécution préférée de l'invention

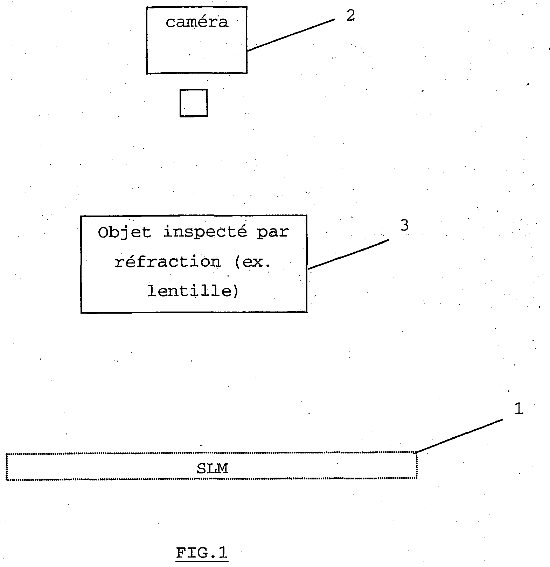

Comme représenté très schématiquement sur la figure 1, la présente invention se rapporte à l'utilisation d'un modulateur de lumière spatial (*spatial light modulator*) ou SLM 1, par exemple un écran d'affichage à cristaux liquides (LCD), fournissant de façon flexible, variable et précise, un dispositif d'éclairage associé à une caméra 2, par exemple CCD ou CMOS, équipée ou non d'un objectif, pour effectuer l'inspection d'un objet optique 3, notamment par exemple une détection de défauts, une lecture de marquages (moulés ou gravés), un relevé de discontinuité (bord de gentille), d'un contour de segment d'une lentille multifocale et ce, par génération de mires appropriées ou de points de taille appropriée à des positions choisies ad hoc.

De manière la plus générale, un SLM est un dispositif d'éclairage permettant une commande digitale ou analogique de l'intensité lumineuse et de la couleur locale qu'il produit, transmet ou réfléchit en tout point, éventuellement dans une direction déterminée.

Habituellement, un SLM est un dispositif électro-optique comprenant un réseau 1D ou 2D, et éventuellement 3D, de pixels utilisables en réflexion ou en transmission et qui peuvent être activés individuellement et instantanément, par des moyens optiques, électriques, etc. Chacun de ces pixels peut moduler la phase et/ou l'intensité de la lumière qui se propage à travers lui ou par réflexion sur lui. Le plus souvent, les SLM sont réalisés en utilisant des afficheurs à cristaux liquides (LCD), mais l'invention peut également être mise en oeuvre en utilisant un dispositif d'éclairage analogique.

Selon une forme d'exécution préférée de l'invention, l'installation se compose d'un système de vision artificielle, comprenant une caméra associée à un objectif, un système de digitalisation d'images et un processeur d'images, ce système de vision artificielle étant couplé à un afficheur LCD programmable, muni éventuellement de miroirs si nécessaire, pour étendre le champ d'observation. L'image de l'afficheur est observée, après réflexion ou transmission, par le système de vision artificielle via la caméra.

Par exemple, on utilisera une caméra CCD vidéo CCIR de 752x582 pixels, équipée d'un objectif de focale 50 mm. Le SLM peut être un afficheur LCD SVGA 800x600 pixels affichant un motif périodique tel que damier ou des lignes contrastées alternativement blanches et noires, de décalage variable. On remarquera que les mires sont choisies au moins pour que le contraste entre le motif généré et le fond des moyens d'éclairage soit élevé et pour que ce motif généré présente des transitions nettes. Pour l'acquisition et le traitement, y compris le calcul du maximum, du minimum ou de la moyenne d'images, etc., on utilisera un PC équipé d'une carte vision et d'une carte d'affichage pour LCD, comme il en existe dans l'état de la technique.

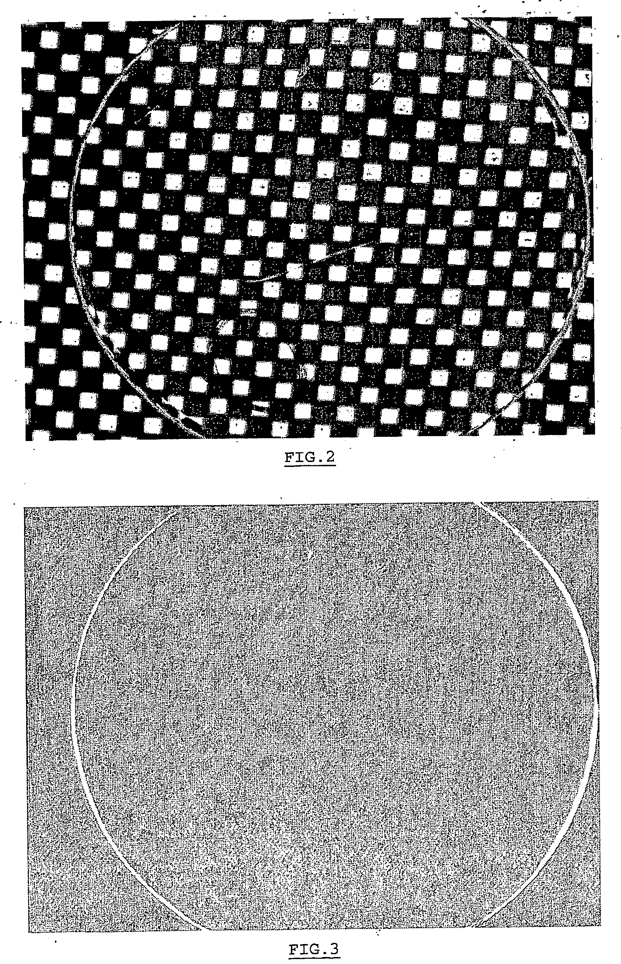

La figure 2 montre l'image d'une lentille prise avec un appareil du type décrit ci-dessus, présentant des défauts d'aspect (cercle tracé au feutre, griffes, empreintes digitales, etc.). Chaque image particulière est prise sur fond d'une mire bidimensionnelle sous la forme d'un damier noir et blanc fortement contrasté. La distance entre la lentille et le support de la mire est de l'ordre de 50 mm et la distance entre la lentille et la caméra est de l'ordre de 500 mm.

Dans le cas d'espèce, 9 images différentes ont été prises consécutivement dans un intervalle d'une seconde environ. D'une image à l'autre, la mire a été décalée d'un pas correspondant à un tiers de période du motif dans les deux directions principales.

L'image recomposée représentée à la figure 3 a été obtenue en retenant pour chaque position (pixel) le niveau de gris minimum parmi les 9 valeurs possibles.

Lorsque ce dispositif est correctement utilisé, il fournit des résultats de qualité très grande, voir inégalée, pour la détection des défauts d'aspect, grâce à une exploitation judicieuse, simple et rapide des images multiples obtenues avec des mires appropriées.

Le synchronisme entre le système de prise d'images et l'afficheur peut être réalisé simplement, sans dispositif supplémentaire. Il est possible par ce dispositif de varier le type de méthode utilisée (champs noirs partiels, champs clairs, alternances noir et blanc contrastés, utilisation de plusieurs points de positionnement avec ajustement en fonction du type de défaut, etc.).

Pour un type de méthode donnée, les divers réglages, que l'on peut effectuer à loisir sur les mires contrastées et les combinaisons d'images de ces mires (analyse), permettent de modifier les divers paramètres influençant d'une part la sensibilité de la détection et d'autre part l'allure de l'image des défauts en fonction de leur type. Cette technique permet une caractérisation, une identification et une détection sensibles.

Avantageusement, selon l'invention, on peut ainsi détecter des défauts de toute nature, les mires étant choisies en fonction notamment de l'échelle des discontinuités ou des imperfections de surface : microscopique pour des défauts diffusants, de l'ordre de 0,1 mm de taille pour la plupart des défauts de distorsion de surface dus à des inclusions ou des marquages, voire plusieurs mm ou plus pour certaines déformations de surface.

## Revendications

1. Procédé d'inspection d'un composant optique de l'industrie ophtalmique, transparent ou réfléchissant à réflexion spéculaire (3) pour détecter des défauts d'aspect ou des discontinuités structurelles, dans une gamme déterminée de taille caractéristique du défaut ou de la discontinuité structurelle, ladite gamme s'étendant du micron à plusieurs millimètres, au moyen d'un appareil muni d'au moins des moyens d'éclairage comprenant un modulateur de lumière spatial programmable (1), en abrégé SLM, ledit SLM étant apte à créer un fond lumineux de luminance variable dans l'espace et dans le temps, et un système de vision artificielle associé (2) comprenant une caméra digitale linéaire ou matricielle précédée d'un objectif et couplée à un système de traitement d'images, dans lequel le composant optique (3) est interposé entre le SLM (1) et le système de vision artificielle (2), ledit SLM (1) comprenant un réseau de pixels activables individuellement et instantanément, ledit procédé présentant les étapes successives suivantes :
- on affiche sur le SLM (1) une pluralité de mires consécutives dans le temps, chacune comprenant un motif périodique, de taille et de fréquence spatiale données, ledit motif périodique ayant une fréquence spatiale comprise entre 0,01 et 100 motifs/mm, et ledit motif étant répété de manière contrastée et avec des transitions nettes sur fond uniforme, de manière telle que lesdites mires consécutives sont décalées spatialement les unes par rapport aux autres ;
- on capte par le système de vision artificielle (2) une pluralité d'images desdites mires obtenues par réflexion spéculaire ou transmission respectivement sur et au travers du composant optique (3), chaque image correspondant à une des mires successivement décalées spatialement ;
- on traite ladite pluralité d'images captées par le système de vision artificielle (2) en recombinant lesdites images sous forme d'une image composée unique, ladite image composée unique étant obtenue en retenant pour chaque pixel d'image, le niveau de gris minimal, maximal ou de la moyenne des images ;
de manière telle que la taille et la fréquence spatiale desdits motifs est choisie pour permettre la détection du défaut d'aspect ou de la discontinuité structurelle dans la gamme déterminée de taille caractéristique.

2. Procédé selon la revendication 1, **caractérisé en ce que** les défauts d'aspect sont sélectionnés dans le groupe constitué des défauts absorbants, des défauts diffusants, des défauts de distorsion dus à des inclusions et des déformations ou discontinuités de surface.

3. Procédé selon la revendication 1, **caractérisé en ce que** les discontinuités structurelles sont sélectionnées dans le groupe constitué de marquages moulés ou gravés et de contours du composant optique.

4. Procédé selon la revendication 1, **caractérisé en ce que** le motif utilisé est sélectionné dans le groupe constitué d'un point, une tache, une forme géométrique régulière ou non, une ligne horizontale, verticale, oblique et une combinaison quelconque d'au moins deux de ces éléments.

5. Procédé selon la revendication 1, **caractérisé en ce que** le décalage spatial des mires est un décalage en translation ou en rotation.

6. Procédé selon la revendication 1, **caractérisé en ce que** le modulateur de lumière spatial (SLM) utilisé est de type afficheur à cristaux liquides (LCD-TFT).

7. Procédé selon la revendication 7, **caractérisé en ce que** ladite caméra digitale utilisée est une caméra de type CCD ou CMOS.

8. Procédé selon l'une quelconque des revendications précédentes, **caractérisé en ce que** l'on utilise comme dispositif optique annexe supplémentaire un masque ou un miroir à réseau périodique.

9. Procédé selon l'une quelconque des revendications précédentes, **caractérisé en ce que** le motif périodique généré est de couleur réglable.

10. Procédé selon l'une quelconque des revendications précédentes, utilisé pour la détection de défauts déviant ou diffusant la lumière, la lecture de marquages moulés ou gravés, le relevé de discontinuités à la surface de l'objet ou le relevé du contour de l'objet.

11. Procédé selon l'une quelconque des revendications précédentes, **caractérisé en ce que** la taille et la fréquence spatiale desdits motifs générés par le SLM sont adaptées pour une utilisation de méthode sélectionnée dans le groupe constitué de la méthode de champ noir ou clair, au moins partiel, la méthode du couteau, l'alternance contrastée de noir et blanc et une utilisation de zone(s) lumineuse(s) essentiellement ponctuelle(s).

## Patentansprüche

1. Verfahren für die Inspektion eines transparenten oder mit spiegelnder Reflexion reflektierenden optischen Bauteils (3) der ophtalmischen Industrie zwecks Feststellung von Aussehensfehlern oder strukturellen Diskontinuitäten in einem bestimmten Größenbereich, der für den Fehler oder die strukturelle Diskontinuität charakteristisch ist, wobei sich der Bereich von Mikron bis zu mehreren Millimetern erstreckt, mit Hilfe eines Geräts, das mindestens mit Beleuchtungsmitteln ausgestattet ist, umfassend einen programmierbaren Raumlichtmodulator (1), abgekürzt SLM, wobei der SLM imstande ist, einen Lichthintergrund mit räumlich und zeitlich variabler Lichtstärke zu erzeugen, und ein zugeordnetes Kunstsichtsystem (2), umfassend eine lineare oder Matrix-Digitalkamera mit vorgeschaltetem Objektiv und gekoppelt an ein Bildverarbeitungssystem, wobei das optische Bauteil (3) zwischen dem SLM (1) und dem Kunstsichtsystem (2) angeordnet ist, wobei der SLM (1) ein Netzwerk individueller und sofort aktivierbarer Pixel umfasst, wobei das Verfahren die folgenden aufeinanderfolgenden Schritte umfasst:
- Anzeigen, auf dem SLM (1), einer Vielzahl von zeitlich aufeinanderfolgenden Testbildern, wobei jedes ein periodisches Motiv in bestimmter Größe und Raumfrequenz umfasst, wobei das periodische Motiv eine Raumfrequenz im Bereich von 0,01 bis 100 Motiven/mm hat, wobei das Motiv kontrastiert und mit klaren Übergängen auf dem gleichmäßigen Hintergrund wiederholt wird, so dass die aufeinanderfolgenden Testbilder in Bezug zueinander räumlich versetzt sind,
- Aufnehmen, mit dem Kunstsichtsystem (2), einer Vielzahl von Bildern der durch spiegelnde Reflexion oder Übertragung jeweils auf und durch das optische Bauteil (3) erhaltenen Testbilder, wobei jedes Bild einem der aufeinanderfolgend räumlich versetzten Testbilder entspricht,
- Verarbeiten der Vielzahl von von dem Kunstsichtsystem (2) aufgenommenen Bilder durch Rekombination der Bilder in Form eines einzigen zusammengesetzten Bilds, wobei das einzige zusammengesetzte Bild durch Berücksichtigung des minimalen, maximalen oder mittleren Grauniveaus der Bilder für jedes Bildpixel erhalten wird,
so dass die Größe und die Raumfrequenz der Motive ausgewählt ist, um die Feststellung des Aussehensfehlers oder der strukturellen Diskontinuität im bestimmten charakteristischen Größenbereich zu erlauben.

2. Verfahren nach Anspruch 1, **dadurch gekennzeichnet, dass** die Aussehensfehler aus der Gruppe ausgewählt sind, die von den absorbierenden Fehlern, von den lichtstreuenden Fehlern, von den Distorsionsfehlern aufgrund von Einschlüssen und von den Oberflächenverformungen oder -diskontinuitäten gebildet ist.

3. Verfahren nach Anspruch 1, **dadurch gekennzeichnet, dass** die strukturellen Diskontinuitäten aus der Gruppe ausgewählt sind, die von geformten oder gravierten Markierungen und Konturen des optischen Bauteils gebildet ist.

4. Verfahren nach Anspruch 1, **dadurch gekennzeichnet, dass** verwendete Motiv aus der Gruppe ausgewählt ist, die von einem Punkt, einem Fleck, einer regelmäßigen oder nicht regelmäßigen geometrischen Form, einer horizontalen, vertikalen, schrägen Linie und von einer beliebigen Kombination von mindestens zwei dieser Elemente gebildet ist.

5. Verfahren nach Anspruch 1, **dadurch gekennzeichnet, dass** der räumliche Versatz der Testbilder ein Versatz durch Verschieben oder Rotieren ist.

6. Verfahren nach Anspruch 1, **dadurch gekennzeichnet, dass** der Raumlichtmodulator (SLM) vom Typ Flüssigkeitskristallanzeige (LCD-TFT) ist.

7. Verfahren nach Anspruch 7, **dadurch gekennzeichnet, dass** die verwendete Digitalkamera eine Kamera des Typs CCD oder CMOS ist.

8. Verfahren nach einem der vorangehenden Ansprüche, **dadurch gekennzeichnet, dass** als zusätzliche weitere optische Vorrichtung eine Maske oder ein Spiegel mit periodischem Netzwerk verwendet wird.

9. Verfahren nach einem der vorangehenden Ansprüche, **dadurch gekennzeichnet, dass** die Farbe des erzeugten periodischen Motivs einstellbar ist.

10. Verfahren nach einem der vorangehenden Ansprüche, verwendet für die Feststellung von Fehlern, welche das Licht ablenken oder diffundieren, das Lesen von geformten oder gravierten Markierungen, für die Feststellung von Diskontinuitäten auf der Oberfläche des Objekts oder die Feststellung der Kontur des Objekts.

11. Verfahren nach einem der vorangehenden Ansprüche, **dadurch gekennzeichnet, dass** die Größe und die Raumfrequenz der von dem SLM erzeugten Motive für eine Verwendung einer Methode geeignet sind, die aus der Gruppe ausgewählt ist, die von der Schwarz- oder Hellfeldmethode, zumindest teilweise, der Messermethode, der kontrastierenden Schwarz-Weiß-Wechselfolge und einer Verwendung von (einer) im Wesentlichen punktuellen Lichtzone(n) gebildet ist.

## Claims

1. Method for inspecting an optical part of the ophthalmic industry, that is transparent or reflective with specular reflection (3) in order to detect aspect defects or structural discontinuities, in a given range of characteristic size of the defect or of the structural discontinuity, said range extending from one micron to a few millimetres, by means of a device provided with at least lighting means comprising a programmable spatial light modulator, in short SLM, said SLM being capable of creating a luminous background with a brightness that may vary over space and time, and an associated system of artificial vision (2) comprising a linear or matrix digital camera preceded by a lens and linked to an image-processing system, in which the optical part (3) is placed between the SLM (1) and the system of artificial vision (2), said SLM (1) comprising a network of pixels that may individually and instantly be activated, said method comprising the following successive steps:
- a plurality of definition charts are consecutively displayed on the SLM (1), each comprising a periodic pattern with a given size and spatial frequency, said periodic pattern having a spatial frequency comprised between 0.01 and 100 patterns/mm, and said pattern being contrastingly repeated with clean transitions over a uniform background so that said consecutive definition charts are spatially shifted relative to one another,
- a plurality of images of said definition charts obtained by specular reflection or transmission over and through the optical part (3), respectively, are collected by the artificial vision system (2), each image corresponding to one of the successive spatially-shifted definition charts,
- said plurality of images collected by the system of artificial vision are treated by recombining said images in the form of a single compound image, said single compound image being obtained by retaining for each pixel the minimum or maximum grey level or the average of images;
such that the size and spatial frequency of said patterns are chosen in order to allow detecting the aspect defect or structural discontinuity in the determined range of characteristic size.

2. Method as in Claim 1, wherein the aspect defects are selected from the group consisting of absorbing defects, diffusing defects, distortion defects caused by inclusions and deformations or discontinuities of surface.

3. Method as in Claim 1, wherein the structural discontinuities are selected from the group consisting of moulded or engraved marks and outlines of the optical component.

4. Method as in Claim 1, wherein the pattern used is selected from the group consisting of a dot, a spot, a regular or irregular geometrical shape, a horizontal, vertical or diagonal line and any combination of at least two of these elements.

5. Method as in Claim 1, wherein the spatial shift of the definition charts is a translation or rotation shift.

6. Method as in Claim 1, wherein the spatial light modulator (SLM) used is of a liquid crystal display type (LCD TFT).

7. Method as in Claim 1, wherein said digital camera used is a camera of a CCD or CMOS type.

8. Method as in any one of the preceding claims, wherein a mask or mirror with periodic network is used as additional auxiliary optical device.

9. Method as in any one of the preceding claims, wherein the colour of the generated periodic pattern can be adjusted.

10. Method as in any one of the preceding claims used for detecting defects that deflect or scatter light, for reading moulded or engraved marks, for observing discontinuities on the surface of the object or for tracing the outline of the object.

11. Method as in any one of the preceding claims wherein the size and spatial frequency of said patterns generated by the SLM are adapted to be used in the context of method selected from the group consisting of the black or bright field method, at least partial, the knife-edge method, the contrasting alternation of black and white and the use of (an) essentially point-shaped luminous zone(s).
